# EUROPÄISCHE PATENTSCHRIFT

(11) **EP 1 275 197 B1**
(45) Veröffentlichungstag und Bekanntmachung des Hinweises auf die Patenterteilung: **04.10.2006**
(21) Anmeldenummer: 01931420.2
(22) Anmeldetag: 06.04.2001
(51) Int. Cl.: H02P 5/00

(54) **ANORDNUNGEN ZUM LAGEGEREGELTEN STILLSETZEN ROTIERENDER BAUTEILE MIT LAGEGEREGELTEN ANTRIEBEN BEI SPANNUNGSAUSFALL**
DEVICES FOR POSITION-CONTROLLED STOPPING OF ROTATING COMPONENTS WITH POSITION-CONTROLLED DRIVE MECHANISMS IN THE CASE OF VOLTAGE LOSS
DISPOSITIF D'ARRET A REGLAGE DE POSITIONNEMENT DE COMPOSANTS ROTATIFS A L'AIDE DE MECANISMES D'ENTRAINEMENT A REGLAGE DE POSITIONNEMENT EN CAS DE PANNE DE COURANT

(30) Priorität: 15.04.2000 DE 10018774
(43) Veröffentlichungstag der Anmeldung: 15.01.2003
(73) Patentinhaber: Koenig & Bauer Aktiengesellschaft, 97080 Würzburg (DE)
(72) Erfinder: MARKERT, Nikolaus, 97855 Triefenstein (DE)
(86) Internationale Anmeldenummer: PCT/DE2001/001345
(87) Internationale Veröffentlichungsnummer: WO 2001/080417

(56) Entgegenhaltungen:
- EP-A- 0 757 306
- DE-A- 3 347 113
- DE-A- 19 509 947
- US-A- 4 642 475
- "MACHINE DRIVE" RESEARCH DISCLOSURE, KENNETH MASON PUBLICATIONS, HAMPSHIRE, GB, Nr. 297, 1989, Seiten 23-24, XP000140078 ISSN: 0374-4353

## Beschreibung

Die Erfindung betrifft eine Anordnung zum lagegeregelten Stillsetzen von rotierenden Bauteilen mit lagegeregelten Antrieben bei Spannungsausfall entsprechend den Merkmalen des Anspruchs 1.

Bei Spannungsausfall werden die Antriebe eines Produktionsverbandes, z. B. einer Rollenrotationsdruckmaschine, winkelsynchron geregelt stillgesetzt, um dadurch einen Bahnbruch zu verhindern. Dabei werden Aggregate mit Überschuss zu kinetischer Energie, z. B. rotierende Schwungmassen, durch geregelten Abbau der Bewegungsenergie, z. B. über Bremswiderstände, sogenannte Bleeder, innerhalb der normalen Schnellstopsequenz zum Stillstand gebracht.

Solche Aggregate, z. B. Falzapparate, welche nicht genügend Rotationsenergie gegenüber der benötigten Prozessenergie während der normalen Schnellstopzeit bereitstellen können, werden fortwährend über externe, unterbrechungsfreie Stromversorgungsanlagen, sogenannte USV, betrieben, um bei Spannungsausfall die erforderliche Prozessenergie aufzubringen.

In ,MACHINE DRIVE` RESEARCH DISCLOSURE, KENNETH MASON PUBLICATIONS, HAMPSHIRE, GB, Nr. 297, 1989, Seiten 23 bis 24 wird eine Anordnung zum lagegeregelten Stillsetzen von rotierenden Bauteilen bei Spannungsausfall beschrieben. Dabei erforderliche zusätzliche Energie wird von einer Batterie zugeführt.

Hierbei ist aber weder offenbart an welchen Teil des Reglers die Batterie angeschlossen ist noch welche Art Motor verwendet wird.

Der Erfindung liegt die Aufgabe zugrunde, eine Anordnung zum lagegeregelten Stillsetzen von rotierenden Bauteilen mit lagegeregelten Antrieben bei Spannungsausfall zu schaffen.

Diese Aufgabe wird erfindungsgemäß durch die Merkmale des Anspruchs 1 gelöst.

Die mit der Erfindung erzielbaren Vorteile bestehen insbesondere darin, dass solchen Aggregaten mit einer für das geregelte Stillsetzen fehlenden eigenen kinetischen Energie nur die für den Stoppprozess benötigte Differenzenergiemenge zwischen vorhandener Rotationsenergie- und benötigter Prozessenergiemenge für den jeweiligen Antrieb zur Verfügung gestellt wird.

Bei einer zweiten Ausführungsvariante können darüber hinaus einige Bauteile einer herkömmlichen USV entfallen, indem nur der Energiespeicher der USV verwendet wird.

Die Erfindung wird nachfolgend an zwei Ausführungsbeispielen näher erläutert. In den zugehörigen Zeichnungen zeigen
- Fig. 1: ein Prinzipschaltbild einer erfindungsgemäßen Schaltungsanordnung in einem ersten Ausführungsbeispiel;
- Fig. 2: ein Prinzipschaltbild einer erfindungsgemäßen Schaltungsanordnung in einem zweiten Ausführungsbeispiel.

Ein rotierendes Bauteil 01, z. B. ein Falzapparat einer Rollenrotationsdruckmaschine wird über einen wellenlosen Antrieb 02, z. B. einen Elektromotor, drehzahl- und lagegeregelt angetrieben. Der Elektromotor 02 erhält seine Energiezufuhr über eine Leitung 03 von einem bekannten Antriebsumrichter 04, welcher über Leitung 06, elektronischen Schalter 07 sowie einen Netzfreischalter 08, Leitung 09 mit einem Betriebsnetz 11, z. B. von 400 Volt Drehstrom, verbunden ist.

Der Antriebsumrichter 04 kann zumindest aus nicht näher dargestellten Baugruppen, wie Gleichrichter, Gleichspannungszwischenkreis, Wechselrichter und Steuerteil bestehen. Weiterhin kann im Antriebsumrichter 04 ein Vorwiderstand oder Bleeder angeordnet sein, um im Bedarfsfall erzeugte überschüssige Bremsenergie in Wärme umzuwandeln.

Für den Fall eines Spannungsausfalles des Betriebsnetzes 11 ist der Antriebsumrichter 04 über eine Leitung 12 mit einem parallel zum Schalter 07 angeordneten elektronischen Schalter 13 verbunden, der über einen Netzfreischalter 14 und Leitung 16 ein Fremdnetz 17, z. B. mit einer externen unterbrechungsfreien Stromversorgungsanlage 17, einem sogenannten USV-Netz 17, z. B. von 400 Volt Wechselstrom, in Verbindung steht.

Zwischen dem Antriebsumrichter 04 und den elektronischen Schaltern 07 und 13 sind gestrichelt gezeichnete Steuerleitungen 19 angeordnet. Ein mit dem Elektromotor 02 gekoppelter Tachogenerator T ist über eine Steuerleitung 18 ebenfalls mit dem Antriebsumrichter 04 verbunden. Im Antriebsumrichter 04 ist ein nicht dargestelltes Steuerteil enthalten.

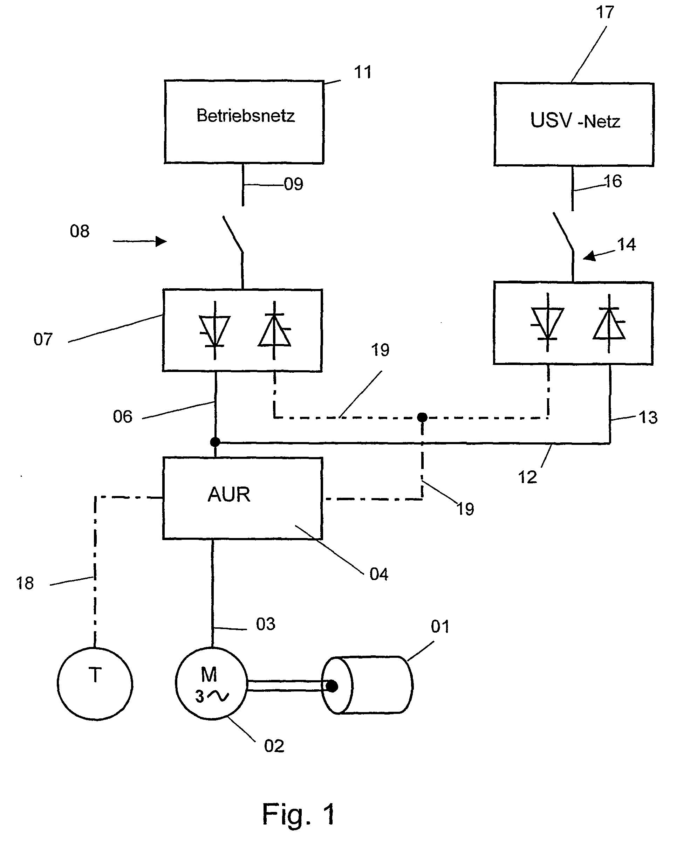

Bei einem Spannungsausfall des Betriebsnetzes 11 (Fig. 1) schalten die elektronischen Schalter 07; 13 vom Betriebsnetz 11 unterbrechungsfrei auf die externe Stromversorgungsanlage 17 um. Damit wird dem Elektromotor 02 über den Antriebsumrichter 04 und Leitung 03 soviel Differenzenergie E_{D}, z. B. 15 kWs, zugeführt, dass das rotierende Bauteil 01 insgesamt eine zum lagerichtigen Stillsetzen benötigte Prozessenergie E_{P}, z. B. von 50 kWs erhält, die wiederum mit z. B. 35 kWs aus der Rotationsenergie E_{R} des Falzapparates 01 gespeist wird.

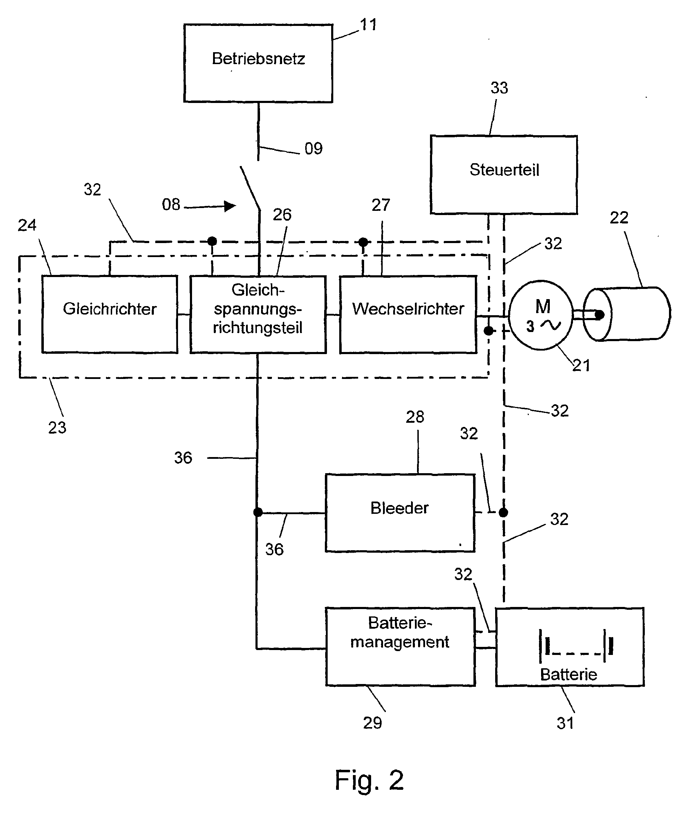

Nach einer anderen Ausführungsvariante der Erfindung erfolgt das lagerichtige Stillsetzen des wellenlos von einem Elektromotor 21 angetriebenen rotierenden Bauteiles 22, z. B. Falzapparates, durch eine unterbrechungsfreie Stromversorgungsanlage 29, 31, welche unmittelbar mit einem Antriebsumrichter 23 verbunden ist (Fig. 2).

Der Antriebsumrichter 23 besteht im wesentlichen aus einem Gleichrichter 24, aus einem Gleichspannungszwischenteil 26 sowie einem Wechselrichter 27. Weiterhin ist dem Antriebsumrichter 23 ein bekannter Bleeder 28 als Bremswiderstand und eine Batterie 31, z. B. 400 Volt, mit dazugehörigem Batteriemanagement 29 zugeordnet.

Alle Baugruppen 21, 26 bis 28, 29, 31 sind durch eine Steuerleitung 32 mit einem Steuerteil 33 verbunden.

Eine gesonderte Stromversorgungsanlage, wie in Fig. 1, Pos. 17, dargestellt, kann hier in Wegfall kommen, da die in der Stromversorgungsanlage 17 sowie im Antriebsumrichter 23 jeweils vorhandenen Eingangs- sowie Ausgangsleistungsteile 24; 27, z. B. Gleichrichter 24 und Wechselrichter 27, gemeinsam benutzt werden können.

Somit wird von der ehemaligen externen unterbrechungsfreien Stromversorgungsanlage nur das Batteriemanagement 29 sowie die Batterie 31, z. B. mit 15 kWs (kurzzeitig) übernommen, d. h. dem Gleichspannungszwischenteil 26 des Antriebsumrichters 23 zugeordnet.

Bei Ausfall des Betriebsnetzes 11 wird über Batteriemanagement 29 auf Batteriebetrieb umgeschaltet. Die so von der Stromversorgungsanlage 29, 31 erhaltene Differenzenergie E_{D} z. B. von 15 kWs reicht zusammen mit der Rotationsenergie E_{R} z. B. 35 kWs des Falzapparates 22 zur Bereitstellung der erforderlichen Prozessenergie E_{P}, z. B. von 50 kWs aus.

Das Gleichspannungszwischenteil 26 ist über Leitungen 36 mit dem Bleeder 28 sowie der Stromversorgungsanlage 29, 31 verbunden.

### Bezugszeichenliste

- 01: rotierendes Bauteil, Falzapparat
- 02: wellenloser Antrieb, Elektromotor
- 03: Leitung (04; 02)
- 04: Antriebsumrichter
- 05: -
- 06: Leitung (04; 07)
- 07: Schalter, elektronisch
- 08: Netzfreischalter (09)
- 09: Leitung
- 10: -
- 11: Betriebsnetz
- 12: Leitung
- 13: Schalter, elektronisch
- 14: Netzfreischalter
- 15: -
- 16: Leitung
- 17: Stromversorgungsanlage; Fremdnetz; unterbrechungsfreie Energiequelle
- 18: Steuerleitung
- 19: Steuerleitung
- 20: -
- 21: wellenloser Antrieb, Elektromotor
- 22: rotierendes Bauteil, Falzapparat
- 23: Antriebsumrichter
- 24: Gleichrichter
- 25: -
- 26: Gleichspannungszwischenteil
- 27: Wechselrichter
- 28: Bleeder (23)
- 29: Batteriemanagement
- 30: -
- 31: Batterie (29)
- 32: Steuerleitung
- 33: Steuerteil
- 34: -
- 35: -
- 36: Leitung

- T: Tachogenerator

- E_{P}: Prozessenergie
- E_{R}: Rotationsenergie
- E_{D}: Differenzenergie

## Patentansprüche

1. Anordnung zum lagegeregelten Stillsetzen von rotierenden Bauteilen (01; 22) bei Spannungsausfall mit folgenden Merkmalen:
die rotierenden Bauteile sind von lagegeregelten Antriebe (02; 21) angetrieben, wobei ein dem rotierenden Bauteil (01; 22) eine zwischen der vorhandenen Rotationsenergie (E_{R}) des rotierenden Bauteiles (01; 22) und der zum lagerichtigen Stillsetzen des rotierenden Bauteiles (01; 22) benötigte Prozessenergie (E_{P}) erforderliche Differenzenergie (E_{D}) zuführendes Fremdnetz vorgesehen ist, wobei das Fremdnetz (17) eine Batterie (31) aufweist, **dadurch gekennzeichnet, dass** die Batterie (31) mit einem Gleichspannungszwischenteil (26) eines Antriebsumrichters (23) verbindbar ist und dass der Antrieb (02; 21) als Drehstrommotor (02; 21) ausgebildet ist.

2. Anordnung nach Anspruch 1, **dadurch gekennzeichnet, dass** eine Kapazität des Fremdnetzes (17) lediglich auf die Differenzenergie (E_{D}) ausgelegt ist.

3. Anordnung nach Anspruch 1, **dadurch gekennzeichnet, dass** zwischen einem Betriebsnetz (11) und einer unterbrechungsfreien Energiequelle (17) mindestens ein Schalter (07; 13) angeordnet ist.

4. Anordnung nach Anspruch 1, **dadurch gekennzeichnet, dass** das rotierende Bauteil (01; 22) in einem Falzapparat (01; 22) einer Rollenrotationsdruckmaschine angeordnet ist.

## Claims

1. A device for the position-controlled stopping of rotating components (01; 22) in the event of voltage failure, with the following features:
the rotating components are driven by position-controlled drives (02; 21), wherein an external network is provided which supplies the rotating component (01; 22) with a differential energy (E_{D}) necessary between the existing rotational energy (E_{R}) of the rotating component (01; 22) and the process energy (E_{P}) required for the stopping of the rotating component (01; 22) in the correct position, wherein the external network (17) comprises a battery (31), **characterized in that** the battery (31) is capable of being connected to a direct-current voltage intermediate part (26) of a drive converter (23), and the drive (02; 21) is constructed in the form of a three-phase current motor (02; 21).

2. A device according to Claim 1, **characterized in that** a capacity of the external network (17) is rated only to the differential energy (E_{D}).

3. A device according to Claim 1, **characterized in that** at least one switch (07; 13) is arranged between an operative network (11) and an uninterruptible energy source (17).

4. A device according to Claim 1, **characterized in that** the rotating component (01; 22) is arranged in a folder (01; 22) of a web-fed rotary printing press.

## Revendications

1. Réglage de positionnement de composants rotatifs (01 ; 22) en cas de panne de courant, avec les caractéristiques suivantes:
les composants rotatifs sont entraînés par des entraînements (02 ; 21) à réglage de positionnement, sachant qu'est prévu un réseau extérieur, amenant au composant rotatif (01 ; 22) une énergie de différence (E_{D}), nécessaire entre l'énergie de rotation (E_{R}), existante, du composant rotatif (01 ; 22) et l'énergie de processus (E_{P}) nécessaire pour la mise à l'arrêt, avec réglage de positionnement, du composant rotatif (01 ; 22), le réseau extérieur (17) présentant une batterie (31), **caractérisé en ce que** la batterie (31) est susceptible d'être reliée à une partie intermédiaire à tension continue (26) d'un mutateur d'entraînement (23), et **en ce que** l'entraînement (02 ; 21) est réalisé sous la forme de moteur à courant alternatif (02 ; 21).

2. Dispositif selon la revendication 1, **caractérisé en ce qu'**une capacité du réseau extérieur (17) est conçue uniquement pour l'énergie de différence (E_{D}).

3. Dispositif selon la revendication 1, **caractérisé en ce qu'**entre un réseau de service (11) et une source d'énergie (17) exempte d'interruption est disposé au moins un interrupteur (07 ; 13).

4. Dispositif selon la revendication 1, **caractérisé en ce que** le composant rotatif (01 ; 22) est disposé dans un appareil de pliage (01 ; 22) d'une machine à imprimer rotative à bobines.
